# EUROPÄISCHE PATENTSCHRIFT

(11) **EP 2 453 155 B1**
(45) Veröffentlichungstag und Bekanntmachung des Hinweises auf die Patenterteilung: **27.05.2015**
(21) Anmeldenummer: 11185967.4
(22) Anmeldetag: 20.10.2011
(51) Int. Cl.: F02M 25/07, F16K 31/52, F16K 31/528

(54) **Ventil mit einer Stellvorrichtung**
Valve with an Actuating Device
Soupape avec un dispositif de réglage

(30) Priorität: 10.11.2010 DE 102010050784
(43) Veröffentlichungstag der Anmeldung: 16.05.2012
(73) Patentinhaber: Pierburg GmbH, 41460 Neuss (DE)
(72) Erfinder: Nowak, Martin, 51379 Leverkusen (DE); Breuer, Dr. Michael, 52152 Simmerath (DE); Regesch, Klaus, 50181 Bedburg (DE); Tönnesmann, Dr. Andres, 52066 Aachen (DE)
(74) Vertreter: Rütten, Peter Laurenz

(56) Entgegenhaltungen:
- EP-A1- 1 526 272
- EP-A2- 1 632 674
- EP-B1- 1 618 292
- DE-A1- 10 221 711
- DE-A1-102008 018 528
- DE-A1-102009 011 256

## Beschreibung

Die Erfindung betrifft ein Ventil mit einer Stellvorrichtung, die eine Antriebseinheit aufweist, die ein Drehmoment erzeugt, einem drehbar auf einem ersten Lagerzapfen angeordneten Exzenter, der über die Antriebseinheit in Drehung versetzbar ist, einem Exzenterausgangszapfen, der an einem bezüglich der Erstreckungsrichtung des Exzenters zum ersten Lagerzapfen gegenüberliegenden Endbereich des Exzenters angeordnet ist und in einer Kulisse eines bewegbaren Kopplungselementes geführt ist und einem durch die Bewegung des Kopplungselementes bewegbaren Verstellelement, wobei am Exzenterausgangszapfen ein Hebelelement derart befestigt ist, dass der Exzenter mit dem Hebelelement und dem Exzenterausgangszapfen eine Kurbel bildet, welche über den ersten Lagerzapfen und einen zweiten Lagerzapfen, die eine gemeinsame Drehachse aufweisen, zweiseitig gelagert ist.

Derartige Ventile mit Stellvorrichtung können im Bereich des Kraftfahrzeugbaus in einer Vielzahl von Anwendungen im Bereich des Verbrennungsmotors verwendet werden. So können derartige Ventile beispielsweise als Abgasrückführventile, Waste-Gate-Ventile, Registerklappen oder VTG-Steller dienen und mittels derartiger Stellvorrichtungen angetrieben werden.

Diese Stellvorrichtungen weisen üblicherweise einen Elektromotor als Antriebseinheit auf, über den ein Getriebe und folgend ein Exzenter angetrieben wird. Dieser Exzenter beziehungsweise der Ausgangsbolzen dieses Exzenters ist im folgenden Kraftübertragungsstrang mit einer Kulisse wirkverbunden, über die die Bewegung des Elektromotors in eine translatorische oder auch eine rotatorische Bewegung eines Verstellelements umgewandelt wird. Das Verstellelement kann dabei entweder die Ventilstange oder die Drehwelle der Klappe sein, welche über das Kopplungselement und die darin angeordnete Kulisse bewegt wird.

So wird in der EP 1 319 879 A1 ein von einem Elektromotor angetriebenes Ventil offenbart, bei dem exzentrisch zu einer Antriebswelle ein Exzenterausgangszapfen angeordnet ist, auf der eine Rolle drehbar befestigt ist, die in einer Kulisse eines Kopplungselementes läuft. Die Rolle wird in eine Richtung mit einer Federkraft beaufschlagt. Die Abrollbahn der Kulisse des Kopplungselementes für die Rolle steht dabei senkrecht zur Bewegungsrichtung des Kopplungselementes, wobei das Ventil eine rein translatorische Bewegung ausführt. Auf den Exzenterausgangszapfen und damit folgend auch den Exzenter und die Drehachse des Exzenters wirkt eine Biegebelastung, die dazu führt, dass entsprechend beanspruchbare Lager verwendet werden müssen.

Des Weiteren ist aus der EP 1 526 272 B1 ein Abgasrückführventil bekannt, bei dem ein Elektromotor als Antriebseinheit dient, welches einen Exzenter antreibt, auf dessen Ausgangswelle eine Rolle angeordnet ist, die in einer Kulisse eines scheibenförmigen Kopplungselementes abrollt. Das Kopplungselement ist mit der Drehwelle einer Abgasrückführklappe drehfest verbunden, so dass durch Drehung der Kurbel eine Drehung des Kopplungselementes und somit der exzentrisch gelagerten Klappe erfolgt. Auch dieser Exzenter ist ständig auf Biegung beansprucht, die bis auf die Lager des Motors wirkt und somit zu erhöhten Verschleißerscheinungen führt.

Auch ist aus der EP 1 618 292 B1 eine elektromagnetische Ventilbetätigungsvorrichtung bekannt, bei der über einen Elektromotor eine Kurbel betätigt wird, welche zweiseitig gelagert ist und deren innerer Zapfen in einer Kulisse geführt ist, die mit einer Ventilstange verbunden ist.

Zusätzlich ist aus der EP 1 632 674 A2 ein Aktor für ein Ventil bekannt, bei der ein Kopplungselement fest mit der Ausgangwelle eines Elektromotors verbunden ist und um seinen Aufhängepunkt bei Betätigung des Aktors gedreht wird. In dem Kopplungselement ist eine Kulisse ausgebildet, in der ein Kugellager abrollt, welches auf einem mit einer Ventilstange verbundenem Zapfen gelagert ist. So wird die rotatorische Bewegung des Elektromotors in eine translatorische Bewegung der Ventilstange umgewandelt.

In der DE 102 21 711 A1 wird ein Doppelventil offenbart, bei dem auf dem Ausgangszapfen eines ersten über den Aktor betätigbaren Exzenter eine Wippe angeordnet ist. Über diese Wippe werden zwei Exzenter gedreht, welche jeweils eine Lagerachse aufweisen, an deren gegenüberliegenden Ende wiederum ein Exzenter angeordnet ist. Auf deren Ausgangswellen ist jeweils ein Kugellager angeordnet, das in einer Kulisse läuft, die mit einer Ventilstange verbunden ist.

Des Weiteren ist aus der DE 10 2008 018 528 A1 ein Ventil bekannt, bei dem auf einer angetriebenen Läuferscheibe, ein Planetenrad exzentrisch und drehbar gelagert ist, welches in einem Hohlrad läuft. Mit dem Planetenrad ist ein exzentrisch und fest zugeordneter Mitnehmer zur Betätigung einer Ventilstange verbunden.

Es stellt sich daher die Aufgabe, ein Ventil mit einer Stellvorrichtung zu schaffen, mit welcher über einen Exzenter angetriebene Klappen oder Ventile angetrieben werden können, ohne dass eine erhöhte Biegebeanspruchung des Exzenters vorliegt, so dass eine hohe Tragfähigkeit der Lagerung auch bei Verwendung einfacher Lager erreicht wird. Gleichzeitig soll eine kompakte und kostenoptimierte Bauweise der Stellvorrichtung erreicht und eine einfache Montierbarkeit sichergestellt werden. Die Verschleißfestigkeit der Lagerstellen und Kontaktflächen zur Kulisse soll erhöht werden.

Diese Aufgaben werden durch ein Ventil mit einer Stellvorrichtung mit den Merkmalen des Hauptanspruchs gelöst. Dadurch, dass am Exzenterausgangszapfen ein Hebelelement derart befestigt ist, dass der Exzenter mit dem Hebelelement und dem Exzenterausgangszapfen eine Kurbel bildet, welche über den ersten und einen zweiten Lagerzapfen, die eine gemeinsame Drehachse aufweisen, zweiseitig gelagert ist, wird erreicht, dass die Biegebeanspruchung des Exzenters entfällt. Hierdurch wird auch die Verschleißfestigkeit der Lagerstellen und der an die Kulisse eingreifenden Teile erhöht. Eine besonders einfache Übersetzung im Antrieb ergibt sich, wenn an dem ersten Lagerzapfen zusätzlich ein Zahnrad befestigt ist, welches über die Antriebseinheit in Drehung versetzbar ist. Dies ermöglicht eine sehr genaue Einstellung der gewünschten Hubhöhen oder Drehwinkel.

Vorzugsweise ist der zweite Lagerzapfen am Hebelelement angeordnet und in einem Gehäuse der Stellvorrichtung gelagert und der erste Lagerzapfen am Exzenter angeordnet und in einem Deckel der Stellvorrichtung gelagert. So kann diese beidseitige Lagerung einfach montiert werden. Des Weiteren bleibt der Aufbau trotz der beidseitigen Lagerung kompakt.

Zur Verringerung der auftretenden Reibkräfte zwischen der Abrollbahn und dem Exzenterausgangszapfen sowie des hierdurch auftretenden Verschleißes ist auf dem Exzenterausgangszapfen eine Rolle oder ein Lager angeordnet, welches in der Kulisse läuft.

Vorteilhafterweise ist der Exzenter einstückig mit dem Zahnrad hergestellt, so dass der benötigte Bauraum verringert wird und die Anzahl der zu montierenden Bauteile sinkt, wodurch der Montageaufwand reduziert wird.

In einer hierzu weiterführenden Ausführungsform sind der Lagerzapfen und der Exzenterausgangszapfen im Zahnrad eingespritzt, wodurch der Montageaufwand nochmals reduziert wird.

Zur weiteren Vereinfachung der Montage ist die zur Drehachse senkrechte Erstreckung des Hebelelementes in allen Richtungen kleiner als die Erstreckung der Kulisse in den entsprechenden Richtungen. Somit kann bei der Montage das Hebelelement durch die Kulisse durchgesteckt werden und der Lagerbolzen in die als Lagerstelle dienende Gehäuseaufnahme eingeschoben werden.

Eine optimale Festigkeit des Hebelelementes wird dadurch erreicht, dass das Hebelelement im Wesentlichen die Form der Kulisse aufweist, also ein Durchstecken durch die Kulisse bei maximaler Größe des Hebels möglich bleibt.

In einer bevorzugten Ausführungsform ist das Kopplungselement mit der Kulisse in seiner Erstreckungsebene an einem ersten Endbereich drehbeweglich gelagert und an einem zur Kulisse gegenüberliegenden Endbereich des Kopplungselementes das Verstellelement drehbeweglich befestigt, wobei das Kopplungselement bei Betätigung der Antriebseinheit einen Winkelbereich durchfährt, der eine im Wesentlichen translatorische Bewegung des Verstellelements verursacht. Somit entsteht eine Umwandlung einer rotatorischen Bewegung in eine im Wesentlichen translatorische Bewegung, die über eine entsprechend ausführende Lagerung des Verstellelementes, welches dann als Schubstange dient, geführt wird. Hierdurch werden die benötigten Betätigungsmomente bei der Verstellung deutlich reduziert, so dass kleine Antriebe verwendet werden können.

In einer weiteren vorteilhaften Ausführung beschreibt die Kulisse eine Kurve mit sich ändernder Steigung. Durch das Zusammenspiel von exzentrischem Antrieb und einer nicht senkrecht zum Hub des Ventils verlaufenden Kurvenbahn mit sich ändernder Steigung können in großem Umfang bedarfsgerechte Kraft-Hub-Verläufe und Drehwinkel-Hub-Verläufe eingestellt werden, die eine Anpassung einer derartigen Stellvorrichtung an eine Vielzahl unterschiedlicher Anwendungen ermöglichen.

Vorzugsweise ist das Kopplungselement im Gehäuse und im Deckel der Stellvorrichtung zweiseitig über einen eine Drehachse des Kopplungselementes bildenden Bolzen gelagert. Auch hier verhindert die beidseitige Lagerung das Entstehen von Biegemomenten am Bolzen, die zu einer erhöhten Beanspruchung der verwendeten Lager und des Bolzens führen.

Es wird somit eine Stellvorrichtung geschaffen, bei der die Belastung der verwendeten Lager reduziert wird, da auf die Lager oder den Exzenter wirkende Biegemomente verhindert werden. Dabei bleibt die Stellvorrichtung kompakt im Aufbau und einfach in der Montage.

Ein Ausführungsbeispiel einer erfindungsgemäßen Stellvorrichtung ist in den Figuren dargestellt und wird nachfolgend beschrieben.

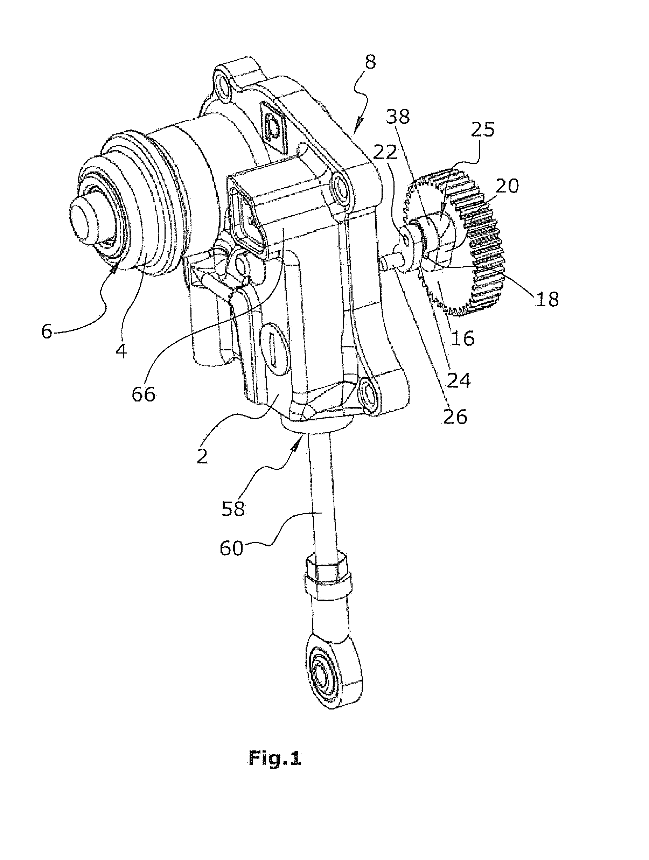

Figur 1 zeigt eine Seitenansicht einer Stellvorrichtung eines erfindungsgemäßen Ventils in perspektivischer Darstellung mit nicht montiertem Exzenter und Verstellelement.
Figur 2 zeigt eine zu Figur 1 entsprechende weitere Seitenansicht der erfindungsgemäßen Stellvorrichtung in perspektivischer Darstellung.
Figur 3 zeigt eine Schnittansicht der erfindungsgemäßen Stellvorrichtung durch die Lagerstellen der Stellvorrichtung.
Figur 4 zeigt die Baueinheit aus Zahnrad und Exzenter mit Lagerzapfen der erfindungsgemäßen Stellvorrichtung gemäß der vorhergehenden Figuren in perspektivischer Darstellung.
Figur 5 zeigt die Baueinheit gemäß Figur 4 von einer entgegengesetzten Seite in perspektivischer Darstellung.

Die Stellvorrichtung besteht aus einem Gehäuse 2, in dem ein als Antriebseinheit 4 dienender Elektromotor in einer entsprechend ausgeformten Aufnahme 6 des Gehäuses 2 angeordnet ist.

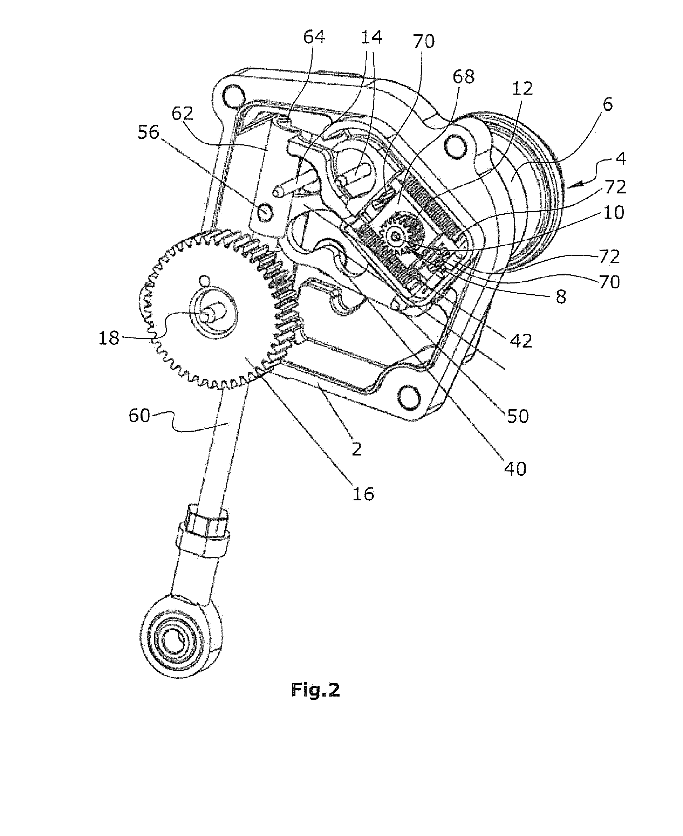

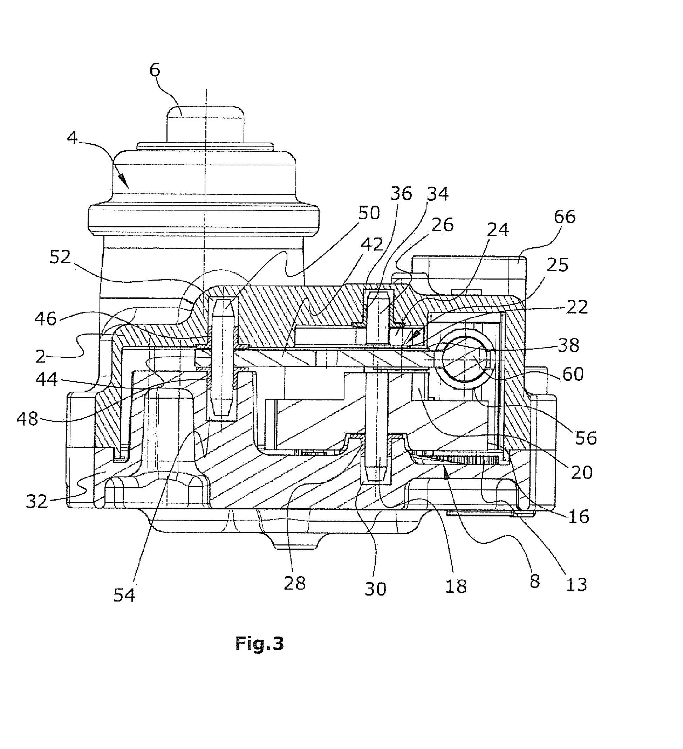

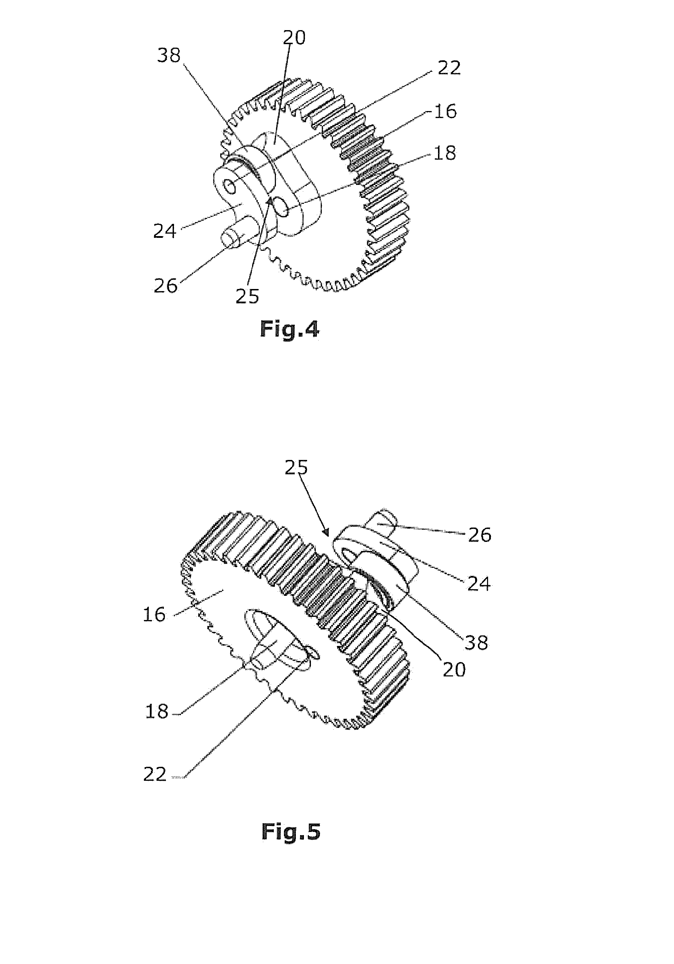

Die Antriebseinheit 4 treibt über ein Getriebe 8, welches als Stirnradgetriebe ausgebildet ist, zunächst ein auf einer Antriebswelle 10 angeordnetes Antriebszahnrad 12 an. Dieses kämmt mit in Figur 3 teilweise zu erkennenden weiteren Zahnradstufen, deren Zahnräder 13 auf Lagerachsen 14 drehbar angeordnet sind, welche in Figur 2 zu erkennen sind. Zuletzt wird die Drehbewegung auf ein Zahnrad 16 übertragen, welches auf einem ersten Lagerzapfen 18 angeordnet und mit diesem Lagerzapfen 18 drehbar ist. Zusätzlich ist auf diesem als Drehwelle dienenden Lagerzapfen 18 ein Exzenter 20 befestigt, der in vorliegender Ausführung einstückig mittels Spritzgießen mit dem Zahnrad 16 hergestellt ist. Am gegenüberliegenden Endbereich des Exzenters 20 ist, wie besonders in den Figuren 4 und 5 zu erkennen ist, ein Exzenterausgangszapfen 22 befestigt, der sich parallel zum Lagerzapfen 18 erstreckt.

Erfindungsgemäß ist am axial gegenüberliegenden Ende des Exzenterausgangszapfens 22 ein Hebelelement 24 befestigt, welches sich parallel zur Erstreckungsrichtung des Exzenters 20 in Richtung zu dessen Drehachse beziehungsweise zu dessen Lagerzapfen 18 erstreckt. An dessen Ende ist wiederum ein zweiter Lagerzapfen 26 befestigt, der in Flucht mit dem ersten Lagerzapfen 18 angeordnet ist. Beide Lagerzapfen 18, 26 erstrecken sich entlang einer gleichen Drehachse. Der Exzenter 20 bildet somit gemeinsam mit dem Exzenterausgangszapfen 22 und dem Hebelelement 24 eine Kurbel 25.

Wie aus Figur 3 hervorgeht, ist der erste Lagerzapfen 18 nach der Montage in einem ersten Gleitlager 28 gelagert, welches in einer entsprechenden Aufnahme 30 in einem Deckel 32 der Stellvorrichtung ausgebildet ist. Der zweite Lagerzapfen 26 ist in einem zweiten Gleitlager 34 in einer im Gehäuse 2 ausgebildeten Aufnahme 36 drehbar gelagert, so dass die Kurbel 25 beidseitig gelagert ist.

Auf dem Exzenterausgangszapfen 22 ist ein Lager 38 in Form eines Rillenkugellagers angeordnet, welches in einer Kulisse 40 eines Kopplungselementes 42 abläuft, welches axial somit zwischen den beiden Lagern 28, 34 der Kurbel 25 angeordnet ist. Die Kulisse 40 wird durch eine Öffnung gebildet, deren Höhe durch zwei gegenüberliegende als Führungsbahn des Lagers 38 dienende Wände begrenzt wird, deren Abstand etwa dem Umfang des Lagers 38 entspricht und deren Bogenlänge durch die Länge des Exzenters 20 sowie dessen Verstellwinkel bestimmt wird. Die begrenzenden Wände der Kulisse 40 sind als stetige, parallel zueinander verlaufende Kurven mit sich ändernder Steigung ausgebildet.

Das Kopplungselement 42 ist im Wesentlichen scheibenförmig ausgebildet und weist an einem ersten Endbereich eine Bohrung 44 auf, durch die eine Drehachse in Form eines in Gleitlagern 46, 48 drehbar gelagerten Bolzens 50 ragt, der fest mit dem Kopplungselement 24 verbunden ist, so dass das Kopplungselement 42 über die Lager 46, 48 in seiner Erstreckungsebene drehbar gelagert ist. Hierzu ist an den axial gegenüberliegenden Seiten des Kopplungselementes 42 im Deckel 32 und im Gehäuse 2 jeweils eines der Lager 46, 48 in entsprechenden Aufnahmeöffnungen 52, 54 befestigt, wodurch auch eine zweiseitige Lagerung des Kopplungselementes 42 besteht. Somit treten weder in den Lagern 46, 48 des Kopplungselementes 42 noch in den Lagern 28, 34 der Kurbel 25 Biegemomente auf.

Am zur Bohrung 44 entgegengesetzten Endbereich des Kopplungselementes 42 ist eine weitere nicht dargestellte Bohrung ausgebildet, in welcher ein Stift 56 befestigt ist, dessen zum Kopplungselement 42 gegenüberliegende Enden in eine entsprechende Durchgangsbohrung 58 eines Verstellelementes 60 quer zur Erstreckungsrichtung dieses Verstellelementes 60 ragen, dass an diesem Ende geschlitzt ausgebildet ist, so dass sich dieses Ende des Kopplungselementes 42 im Schlitz bewegen kann. Das Verstellelement 60 ist entweder eine Ventilstange oder ein Betätigungshebel, der direkt oder indirekt mit einer Drehwelle einer Klappe gekoppelt ist. Die Kulisse 40 befindet sich auf dem scheibenförmigen Kopplungselement 42 zwischen den beiden Bohrungen 44.

Das Verstellelement 60 ragt durch eine nicht dargestellte Öffnung im Gehäuse, die eine leichte Kippbewegung des Verstellelementes erlaubt, nach außen.

Am im Gehäuse 2 angeordneten axialen Ende des Verstellelementes 60 ist eine Aufnahme 62 für einen Magneten 64 ausgebildet. Dieser wird mit dem Verstellelement 60 bewegt und wirkt in bekannter Weise mit einem nicht dargestellten Sensor zusammen, der die Feldstärke in zwei orthogonal zueinander stehenden Richtungen misst. Hierdurch wird es möglich den Winkel der Feldlinien zu bestimmen, so dass das Ergebnis des Sensors von Fehlern durch eine auftretende Kippbewegung des Magneten befreit werden kann, da jeder Stellung des Magneten 64 nur genau eine Kombination der beiden Feldstärken entspricht. Somit entsteht ein eindeutiges Ergebnis bei der Lagerückmeldung. Üblicherweise ist dieser Sensor im Bereich eines Anschlusssteckers 66 angeordnet, der am Gehäuse 2 ausgebildet ist. Dieser weist auch eine elektrische Verbindung zu einer Platine 68 auf, die das Antriebszahnrad 12 umgibt und die Anschlusskontakte 70 sowie Entstörelemente 72 aufnimmt.

Mit Betätigung der Antriebseinheit 4 wird die Antriebswelle 10 gedreht. Damit dreht sich über das Getriebe 8 auch das Zahnrad 16 mit dem Exzenter 20, so dass der Exzenterausgangszapfen 22 in einem Kreisbogen um die Drehachse der Lagerzapfen 18, 26 gedreht wird. Das Lager 38 rollt entsprechend in der Kulisse 40 ab. Somit wirkt eine ein Drehmoment erzeugende Kraft vom Lager 38 auf das Kopplungselement 42, durch welches das Kopplungselement 42 um den Bolzen 50 gedreht wird. Durch diese Drehung wird der Stift 56 in einem Kreisbogen um den Bolzen 50 gedreht. Der Bolzen 50 und der Stift 56 sind derart angeordnet, dass der Kreisbogen, auf dem sich der Stift 56 bewegt, eine deutlich größere Komponente in Richtung der Erstreckungsachse des Verstellelementes 60 aufweist als in einer senkrecht hierzu stehenden Richtung. Entsprechend wird das Verstellelement 60 über den Stift 56 nach unten gedrückt.

Durch eine entsprechende Ausbildung der Kulisse können verschiedene Kraft-Hubverläufe und Drehwinkel-Hubverläufe eingestellt werden.

Bei der Montage der Stellvorrichtung kann das Zahnrad 16 mit der gesamten Kurbel 25 gemeinsam eingesetzt werden, da das Hebelelement 24 der Kurbel 25 im Wesentlichen die Form der Kulisse 40 aufweist, jedoch geringfügig kleiner ausgebildet ist, so dass das Hebelelement 24 der Kurbel 25 durch die Kulisse 40 hindurch in die Aufnahme 36 für den Lagerzapfen 26 gesteckt werden kann. Durch anschließendes Aufsetzen des Deckels 32 erfolgt die Verwirklichung der zweiseitigen Lagerung vom Kopplungselement 42 und von der Kurbel 25, da der Bolzen 50 und der erste Lagerzapfen 18 nun in die entsprechenden Lager 28, 48 ragen.

Neben diesem Vorteil der vereinfachten Montage wird durch diese Ausbildung verhindert, dass Biegemomente auf die Lagerzapfen 18, 26 oder den Bolzen 50 wirken, da jeweils eine beidseitige Lagerung verwirklicht wird. Dies verringert die Belastung der Lagerstellen, so dass die Verschleißfestigkeit verbessert wird. Die Tragfähigkeit der Lagerung wird erhöht, wobei geringere Flächenpressungen in den Lagerstellen erreicht werden.

Es sollte deutlich sein, dass der Schutzbereich der Ansprüche nicht auf das beschriebene Ausführungsbeispiel beschränkt ist, sondern eine derartige Ausführung beispielsweise auch für Drehantriebe verwendet werden kann. Auch sollte deutlich sein, dass unter dem Begriff Ventil sowohl Hub- oder Drehventile als auch Klappen im Sinne der Anmeldung zu verstehen sind. Je nach Anwendung können unterschiedliche Formen der Führungsbahn hergestellt werden, um zu einem vorteilhaften Kraft-Hub-Verlauf zu gelangen. Auch kann eine solche Stellvorrichtung mit oder ohne vorgeschalteter Unter- oder Übersetzung betrieben werden. Weitere konstruktive Änderungen sind selbstverständlich ebenfalls denkbar.

## Patentansprüche

1. Ventil mit einer Stellvorrichtung,
die eine Antriebseinheit (4) aufweist, die ein Drehmoment erzeugt, einem drehbar auf einem ersten Lagerzapfen (18) angeordneten Exzenter (20), der über die Antriebseinheit (4) in Drehung versetzbar ist,
einem Exzenterausgangszapfen (22), der an einem bezüglich der Erstreckungsrichtung des Exzenters (20) zum ersten Lagerzapfen (18) gegenüberliegenden Endbereich des Exzenters (20) angeordnet ist und in einer Kulisse (40) eines bewegbaren Kopplungselementes (42) geführt ist und
einem durch die Bewegung des Kopplungselementes (42) bewegbaren Verstellelement (60),
wobei am Exzenterausgangszapfen (22) ein Hebelelement (24) derart befestigt ist, dass der Exzenter (20) mit dem Hebelelement (24) und dem Exzenterausgangszapfen (22) eine Kurbel bildet, welche über den ersten Lagerzapfen (18) und einen zweiten Lagerzapfen (26), die eine gemeinsame Drehachse aufweisen, zweiseitig gelagert ist,
**dadurch gekennzeichnet, dass**
an dem ersten Lagerzapfen (18) zusätzlich ein Zahnrad (16) befestigt ist, welches über die Antriebseinheit (4) in Drehung versetzbar ist.

2. Ventil mit einer Stellvorrichtung nach Anspruch 1,
**dadurch gekennzeichnet, dass**
der zweite Lagerzapfen (26) am Hebelelement (24) angeordnet und in einem Gehäuse (2) der Stellvorrichtung gelagert ist und der erste Lagerzapfen (18) am Exzenter (20) angeordnet und in einem Deckel (32) der Stellvorrichtung gelagert ist.

3. Ventil mit einer Stellvorrichtung nach einem der Ansprüche 1 oder 2,
**dadurch gekennzeichnet, dass**
auf dem Exzenterausgangszapfen (22) eine Rolle oder ein Lager (38) angeordnet ist, welches in der Kulisse (40) läuft.

4. Ventil mit einer Stellvorrichtung nach einem der vorhergehenden Ansprüche,
**dadurch gekennzeichnet, dass**
der Exzenter (20) einstückig mit dem Zahnrad (16) hergestellt ist.

5. Ventil mit einer Stellvorrichtung nach Anspruch 4,
**dadurch gekennzeichnet, dass**
der erste Lagerzapfen (18) und der Exzenterausgangszapfen (22) im Zahnrad (16) eingespritzt sind.

6. Ventil mit einer Stellvorrichtung nach einem der vorhergehenden Ansprüche,
**dadurch gekennzeichnet, dass**
die zur Drehachse senkrechte Erstreckung des Hebelelementes (24) in allen Richtungen kleiner ist als die Erstreckung der Kulisse (40) in den entsprechenden Richtungen.

7. Ventil mit einer Stellvorrichtung nach Anspruch 6,
**dadurch gekennzeichnet, dass**
das Hebelelement (24) im Wesentlichen die Form der Kulisse (40) aufweist.

8. Ventil mit einer Stellvorrichtung nach einem der vorhergehenden Ansprüche,
**dadurch gekennzeichnet, dass**
das Kopplungselement (42) mit der Kulisse (40) in seiner Erstreckungsebene an einem ersten Endbereich drehbeweglich gelagert ist und an einem zur Kulisse (40) gegenüberliegenden Endbereich des Kopplungselementes (42) das Verstellelement (60) drehbeweglich befestigt ist, wobei das Kopplungselement (42) bei Betätigung der Antriebseinheit (4) einen Winkelbereich durchfährt, der eine im Wesentlichen translatorische Bewegung des Verstellelementes (60) verursacht.

9. Ventil mit einer Stellvorrichtung nach einem der vorhergehenden Ansprüche,
**dadurch gekennzeichnet, dass**
die Kulisse (40) eine Kurve mit sich ändernder Steigung beschreibt.

10. Ventil mit einer Stellvorrichtung nach einem der vorhergehenden Ansprüche,
**dadurch gekennzeichnet, dass**
das Kopplungselement (42) im Gehäuse (2) und im Deckel (32) der Stellvorrichtung zweiseitig über einen eine Drehachse des Kopplungselementes (42) bildenden Bolzen (50) gelagert ist.

## Claims

1. Valve comprising an actuating device with
a drive unit (4) generating a torque,
an eccentric (20) rotatably arranged on a first bearing pin (18), said eccentric being rotatable by the drive unit (4),
an eccentric output pin (22) arranged at an end portion of the eccentric (20) which, with respect to the direction of the extension of the eccentric (20), is situated opposite the first bearing pin (18) and is guided in a slotted link (40) of a movable coupling element (42), and
an adjustment element (60) movable by the movement of the coupling element (42),
wherein a lever element (24) is fastened at the eccentric output pin (22) such that the eccentric (20), together with the lever element (24) and the eccentric output pin (22), forms a crank which is supported on two sides by the first bearing pin (18) and a second bearing pin (26), which have a common axis of rotation,
**characterized in that**
in addition, a gear (16) is mounted on the first bearing pin (18), said gear being rotatable by said drive unit (4).

2. Valve comprising an actuating device as defined in claim 1, **characterized in that** the second bearing pin (26) is arranged at the lever element (24) and is supported in a housing (2) of the actuating device, and the first bearing pin (18) is arranged at the eccentric (20) and is supported in a cover (32) of the actuating device.

3. Valve comprising an actuating device as defined in one of claims 1 or 2, **characterized in that** a roller or a bearing (38) is arranged on the eccentric output pin (22), said roller or bearing moving in the slotted link (40).

4. Valve comprising an actuating device as defined in of one of the preceding claims, **characterized in that** the eccentric is made integrally with the gear (16).

5. Valve comprising an actuating device as defined in claim 4, **characterized in that** the first bearing pin (18) and the eccentric output pin (22) are injection molded in the gear (16).

6. Valve comprising an actuating device as defined in of one of the preceding claims, **characterized in that** the dimension of the lever element (24) perpendicular to the axis of rotation is smaller in all directions that the dimension of the slotted link (40) in the corresponding directions.

7. Valve comprising an actuating device as defined in claim 6, **characterized in that** the lever element (24) substantially has the shape of the slotted link (40).

8. Valve comprising an actuating device as defined in of one of the preceding claims, **characterized in that** the coupling element (42) with the slotted link (40) is rotatably supported at a first end portion in its plane of extension, and the adjustment element (60) is rotatably mounted at an end portion of the coupling element (42) opposite the slotted link (40), wherein, upon activation of the drive unit (4), the coupling element (42) travels through an angular range that causes a substantially translational movement of the adjustment element (60).

9. Valve comprising an actuating device as defined in of one of the preceding claims, **characterized in that** the slotted link (40) describes a curve with a varying slope.

10. Valve comprising an actuating device as defined in of one of the preceding claims, **characterized in that** the coupling element (42) is supported on two sides, in the housing (2) and the cover (32) of the actuating device, via a bolt (50) forming the axis of rotation of the coupling element (42).

## Revendications

1. Soupape avec un dispositif de réglage ayant
une unité d'entrainement (4) générant un couple,
un excentrique (20) monté de manière rotative sur un premier tourillon de palier (18), ledit excentrique pouvant être mis en rotation par ladite unité d'entrainement (4),
un tourillon de sortie (22) de l'excentrique disposé à la partie d'extrémité dudit excentrique (20) opposée au premier tourillon de palier (18), vu dans la direction de l'extension dudit excentrique (20), et guidé dans une coulisse (40) d'un élément de couplage (42) déplaçable, et
un élément d'ajustage (60) déplaçable par le mouvement dudit élément de couplage (42),
un élément de levier (24) étant monté sur ledit tourillon de sortie (22) de l'excentrique de sorte que ledit excentrique (20), avec ledit élément de levier (24) et ledit tourillon de sortie (22) de l'excentrique, forme une manivelle, qui est supportée sur deux cotés par ledit premier tourillon de palier (18) et un deuxième tourillon de palier (26), les tourillons ayant un axe de rotation commun,
**caractérisée en ce qu'**
en plus, une roue dentée (16) est montée sur ledit premier tourillon de palier (18), roue qui peut être mise en rotation par ladite unité d'entrainement (4).

2. Soupape avec un dispositif de réglage selon la revendication 1, **caractérisée en ce que** ledit deuxième tourillon de palier (26) est disposé sur ledit élément de levier (24) et est supporté dans un carter (2) du dispositif de réglage, et ledit premier tourillon de palier (18) est disposé sur ledit excentrique (20) et est supporté dans un couvercle (32) dudit dispositif de réglage.

3. Soupape avec un dispositif de réglage selon l'une quelconque des revendications 1 ou 2, **caractérisée en ce qu'**un rouleau ou un palier (38), se déplaçant dans ladite coulisse (40), est disposé sur ledit tourillon de sortie (22) de l'excentrique.

4. Soupape avec un dispositif de réglage selon l'une quelconque des revendications précédentes, **caractérisée en ce que** l'excentrique (20) est fabriqué d'un seul tenant avec ladite roue dentée (16).

5. Soupape avec un dispositif de réglage selon la revendication 4, **caractérisée en ce que** ledit premier tourillon de palier (18) et ledit tourillon de sortie (22) de l'excentrique sont moulés par injection dans ladite roue dentée (16).

6. Soupape avec un dispositif de réglage selon l'une quelconque des revendications précédentes, **caractérisée en ce que** la dimension dudit élément de levier (24) perpendiculaire à l'axe de rotation est inférieure, dans toute direction, à la dimension de la coulisse (40) dans les directions correspondantes.

7. Soupape avec un dispositif de réglage selon la revendication 6, **caractérisée en ce que** ledit élément de levier (24) à, pour l'essentiel, la forme de la coulisse (40).

8. Soupape avec un dispositif de réglage selon l'une quelconque des revendications précédentes, **caractérisée en ce que**, dans son plan d'extension, ledit élément de couplage avec la coulisse (40) est supporté de manière rotative sur une première partie d'extrémité, et ledit élément d'ajustage (60) est monté de manière rotative à une partie d'extrémité dudit élément de couplage (42) opposée par rapport à la coulisse (40), ledit élément de couplage (42) traversant, lorsque ladite unité d'entrainement (4) est activée, une plage angulaire qui effectue un déplacement sensiblement translatoire dudit élément d'ajustage (60).

9. Soupape avec un dispositif de réglage selon l'une quelconque des revendications précédentes, **caractérisée en ce que** la coulisse (40) décrit une courbe à pente variable.

10. Soupape avec un dispositif de réglage selon l'une quelconque des revendications précédentes, **caractérisée en ce que** ledit élément de couplage (42) est supporté à deux cotés dans le carter (2) et le couvercle (32) dudit dispositif de réglage par un boulon (50) formant l'axe de rotation dudit élément de couplage (42).
